# EUROPEAN PATENT SPECIFICATION

(11) **EP 4 063 185 B1**
(45) Date of publication and mention of the grant of the patent: **13.11.2024**
(21) Application number: 21315051.9
(22) Date of filing: 24.03.2021
(51) Int. Cl.: B60M 1/30, B60M 1/24

(54) **HANGER CLAMP FOR HOLDING A CONDUCTIVE PROFILE, RIGID OVERHEAD CATENARY SYSTEM AND RAILTRACK COMPRISING SUCH A HANGER CLAMP**
AUFHÄNGEKLEMME ZUM HALTEN EINES LEITENDEN PROFILS, STARRES OBERLEITUNGSSYSTEM UND SCHIENENSYSTEM MIT EINER SOLCHEN AUFHÄNGEKLEMME
PINCE DE SUSPENSION POUR MAINTENIR UN PROFIL CONDUCTEUR, SYSTÈME DE CATÉNAIRE AÉRIENNE RIGIDE ET VOIE FERRÉE COMPRENANT UNE TELLE PINCE DE SUSPENSION

(43) Date of publication of application: 28.09.2022
(73) Proprietor: ALSTOM Holdings, 93400 Saint-Ouen-sur-Seine (FR)
(72) Inventor: Giugliano, Dario, 23900 Lecco (IT); Binda, Claudio, LC 23821 Abbadia Lariana (IT); Micheli, Silvano, 23821 Abbadia Lariana (IT)
(74) Representative: Lavoix

(56) References cited:
- EP-B1- 3 102 458
- CN-A- 102 785 590
- DE-A1- 102010 033 451
- KR-A- 20170 043 437
- ANONYMOUS: "Polytetrafluoroethylene (PTFE)", WIKIPEDIA, 1 January 2021 (2021-01-01), XP055785677, Retrieved from the Internet <URL:https://en.wikipedia.org/wiki/Polytetrafluoroethylene> [retrieved on 20210315]

## Description

The present invention relates to a hanger clamp for holding a conductive profile, to a rigid overhead catenary system and to a railtrack comprising such a hanger clamp.

Known electric railroad vehicles, such as tramways or metros, are generally supplied with electric energy through a rigid overhead catenary system, also called ROCS in short. A ROCS comprises a contact wire, usually made out of copper or one of its alloys, that is rigidly held by a conductive profile, also called busbar. Common busbars are made out of lightweight conductive metal, such as aluminum or one of its alloys. To ensure a good geometric alignment of the contact wire relatively to the rail track, each busbar holds the contact wire continuously and is held by hanger clamps. The hanger clamps are fixed to the infrastructure of the railtrack, for example to a ceiling of a tunnel section or to a steel cantilever linked to the trackside, so that the contact wire is hanging downwardly, the contact wire being arranged along a longitudinal direction parallel to the railtrack.

To avoid electric discharges between the busbar and the hanger clamp and/or the steel cantilever, the busbar and the hanger clamp are electrically connected together, to ensure that the same electric potential is present on the hanger clamp and on the busbar.

In addition, since the busbars are continuous and made from metal, the busbars show relatively high dimensional variations due to the temperature changes, caused for example by seasonal variations or by self-heating when an electric current flows through the ROCS. To avoid local stress and/or deformations, the busbar held by the hanger clamps is allowed to slide relatively to the hanger clamps along the longitudinal direction.

To cope with these two problems, CN-202782747-U describes, for example, a hanger clamp that comprises inserts made from carbon/graphite composite materials. Such inserts are costly to produce and remain relatively brittle, requiring regular maintenance.

The document CN 102 785 590 B describes also a similar hanger clamp.

The document KR 2017 0043437 A describes a hanger clamp with a plastic material with a small frictional resistance, but with insulating characteristics.

There is a need for an improved hanger clamp, with better durability.

To this end, aspects of the invention pertains to a hanger clamp for holding a conductive profile of a rigid overhead catenary system belonging to a railtrack, the hanger clamp comprising:
- a clamping portion, preferentially made of an aluminum alloy, configured to receive a base plate of the conductive profile, the clamping portion extending along a median plane and along a longitudinal axis, which is parallel to the median plane,
- a connecting portion, configured to connect said base plate to a fixed element of the railtrack, such as a beam or a tunnel ceiling,

wherein the clamping portion comprises two jaws, each jaw having a U profile extending along the longitudinal axis and facing each other, each jaw defining a reception volume configured to receive a respective edge of the base plate,
wherein the hanger clamp further comprises two inserts, each insert being received within a respective reception volume and being configured to be positioned between the corresponding jaw and the base plate while allowing sliding movements of the conductive profile relative to the hanger clamp along the longitudinal axis, each insert being also configured to conduct electricity between the base plate and the clamping portion.

According to the invention, the inserts are made from a material comprising a synthetic polymer and a conductive charge.

Thanks to the invention, the inserts are both cheap to produce and resilient, thus improving the cost price and the durability of the hanger clamp. Thanks to the conductive charge, the busbar held by the hanger clamp and the hanger clamp present the same electrical potential, which reduces the risk of electrical arc, while the synthetic polymer allows sliding of the busbar relatively to the hanger clamp in the longitudinal direction.

According to advantageous but optional aspects, such a hanger clamp may incorporate one or more of the following features, considered alone or according to any combination according to the appended claims.
- the jaws are arranged symmetrically from each other apart a longitudinal plane, the longitudinal plane being parallel to the longitudinal axis and orthogonal to the median plane.
- The synthetic polymer is a thermoplastic polymer.
- The conductive charge comprises fibers.
- The inserts are made from polyamide with carbon fibers.

The invention also concerns rigid overhead catenary system, comprising a contact line held by a conductive profile, the conductive profile being held by hanger clamps, wherein at least one hanger clamp is as described here above.

Other aspects of the invention concerns a railtrack, comprising a track and a rigid overhead catenary system as described here above.

The invention will be better understood, and other advantages thereof will appear more clearly, in light of the following description of one embodiment of an hanger clamp, a rigid overhead catenary system and a railtrack according to the invention, this description being provided solely as a non-limiting example and done in reference to the appended drawings, in which:
- figure 1 is a schematic side-view of a railtrack according to the invention, comprising a rigid overhead catenary system suspended by hanger clamps according to the invention, and
- figure 2 is a perspective exploded view, along arrow II, of the rigid overhead catenary system of figure 1.

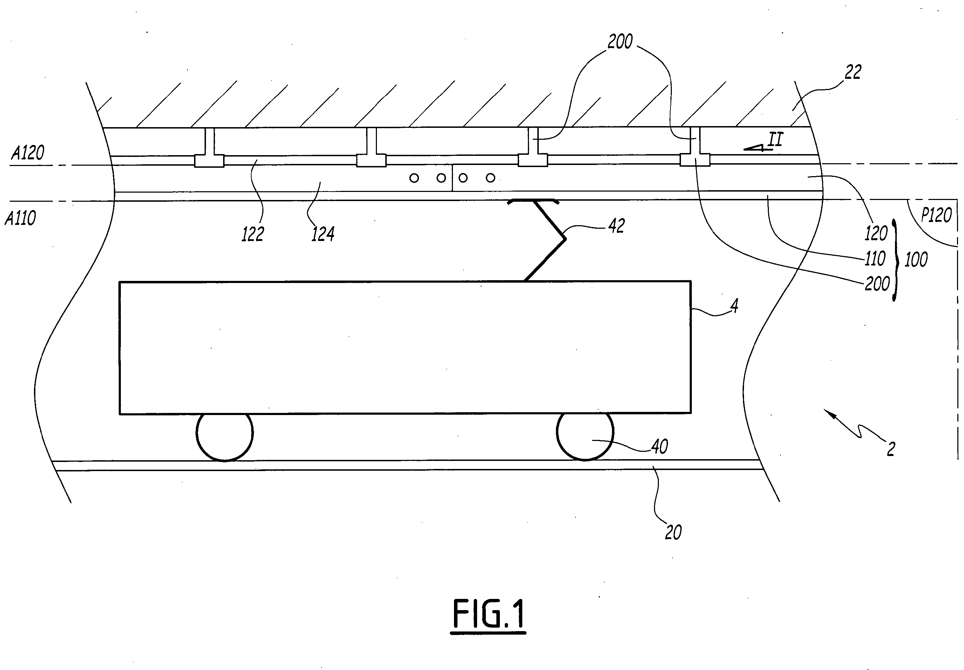

Figure 1 represents a railtrack 2. The railtrack 2 comprises two rails, which are parallel to each other. Only one rail 20 is visible on figure 1, and is supposed to be straight and horizontal.

The railtrack 2 is configured to have a vehicle 4 running on the rails 20. The vehicle 4 is for example a rail electric vehicle, such as a train, a metro, or a tramway, and comprises wheels 40 that are powered by an electric motor. The electric motor is not shown. Alternatively, the vehicle 3 runs on tires, and the rails 20 are replaced by guideways.

The railtrack 2 comprises a rigid overhead catenary system 100, also called ROCS 100 within the present description, configured to supply the vehicle 4 with electric energy.

To this end, the vehicle 4 comprises an electricity collection device 42, such as a pantograph, which comes into contact with the ROCS 100 to collect electrical energy. In the example illustrated on figure 1, the electricity returns to the railtrack 2 through the wheels 40.

The ROCS 100 is fixed relative to the rails 20, more precisely the ROCS is arranged above the rail 20 at a fixed height, so that the electricity collection device 42 works properly when the rail vehicle 4 moves.

The ROCS 100 comprises a contact wire 110 and a busbar 120. The contact wire 110 is configured to be in contact with the electricity collection device 42 and is made from conductive metal, preferably from copper or copper alloy, to ensure a low electric resistance. The wire 110 forms a contact line for the ROCS 100.

The contact wire 110 presents a cylindrical shape extending along a longitudinal axis A110, which is parallel to the rail 20. The contact wire 110 is held by the busbar 120, preferably continuously and rigidly held, so that the contact wire 110 does not flex when the current collection device 42 is pressing onto the contact wire 110.

The busbar 120 is a conductive profile, which extends along a longitudinal axis A120, parallel to the longitudinal axis A110 of the wire 110. The busbar 120 is preferably made from a lightweight and conductive metal such as aluminum or an aluminum alloy. The busbar 120 is usually produced by extrusion.

The ROCS 100 further comprises hanger clamps 200, which are for example fixed to a ceiling 22 of a tunnel section of the railtrack 2, above the rail 20. In other words, the ROCS 100 is suspended to the ceiling 22.

The busbar 120 extends downwardly from the clamps 200, and the contact wire 110, held by the busbar 120, faces the ground. In a not shown alternative, the ROCS 100 is attached to a beam belonging to a mast, the mast being arranged on the trackside and the beam extending above the rail 20.

Within the scope of this description, it is assumed that the longitudinal axis A120 is horizontal, and that the busbar 120 hangs vertically. Of course in reality the actual orientation of the busbar 120 may vary, for example in slope sections or in curve sections of the railtrack 2.

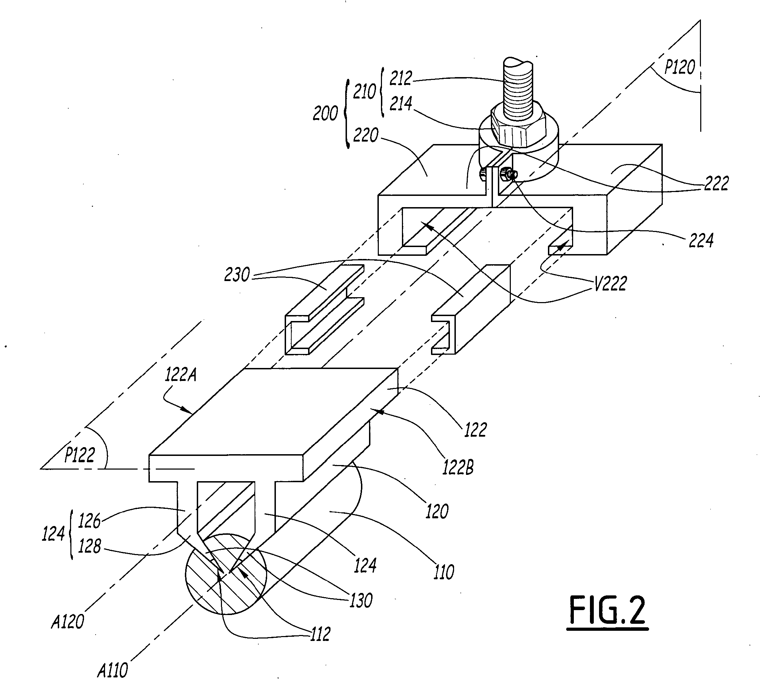

The ROCS 100 is further detailed with reference to figure 2.

The contact wire 110 presents a globally round profile, with two slits 112 configured to cooperate with clamping tips of the busbar 120, as described later.

The busbar 120 comprises a base plate 122, which is configured to cooperate with the hanger clamps 120. The base plate 122 has flat and elongated shape, that extends along a median plane P122 and that is arranged along the longitudinal axis A120 of the busbar 120. The medial plane P122 is supposed to be horizontal. The base plate 122 comprises two side edges 122A and 122B, which are parallel to a longitudinal plane P120, which is orthogonal to the median plane P122 and parallel to the longitudinal axis A120.

The busbar 120 further comprises two holding arms 124. The holding arms 124 extend from the base plate 122 on the same side of the median plan P122, here from a downward side of the base 122. Each holding arm 124 comprises a main portion 126 and a clamping portion 128.

In the illustrated example, the main portions 126 are parallel to the longitudinal plane P120. The two clamping portion 128 converge toward each other and comprise each a clamping tip 130, which cooperate with a respective slit 112 of the contact wire 110.

The hanger clamp 200 comprises a connecting portion 210 and a clamping portion 220. Only a threaded portion 212 and a nut 214 of the connecting portion 210 are represented on figure 2.

The connecting portion 210 is configured to cooperate with an element of the railtrack 2, such as a beam or a tunnel ceiling, etc., in order to connect the clamping portion 220 to the railtrack 2, in particular in order to adjust the height of the clamping portion 220 above the railtrack 2.

The clamping portion 220 is made of metallic lightweight material such as an aluminum alloy. The clamping portion 220 is configured to receive the base plate 122 of the busbar 120. In other words, the clamping portion 220 is configured to connect said base plate 122 to a fixed element of the railtrack 2.

When the base plate 122 is received in the clamping portion 220, the clamping portion 220 extends along a plane that is aligned with the median plane P122, and the clamping portion 220 has a cylindrical shape, with a rectangular cross section, extending along an axis that is parallel to the longitudinal axis A120.

The clamping portion 220 comprises two jaws 222. The two jaws 222 have preferably the same shape and are reversibly assembled to each other with fixing organs 224, such as nuts and bolts.

The two jaws 222 are arranged symmetrically from each other apart the longitudinal plane P120. Each jaw 222 has a cylindrical shape with a "U" profile extending along the longitudinal axis A120, the jaws 222 facing each other with the opening of the "U" being oriented toward the longitudinal plane P120. Each jaw 222 defines a reception volume V222, configured to receive a respective side edge 122A or 1228 of the base plate 122.

The hanger clamp 200 further comprises two inserts 230, each insert 230 being received within the reception volume V222 of a respective jaw 222. in the illustrated example, each insert 230 has a cylindrical shape with a "U" profile extending along the longitudinal axis A120 in the mounted configuration of the hanger clamp 200.

When the base plate 122 is received in the clamping portion 220, the inserts 230 are sandwiched between the base plate 122 and the jaws 222, so that the base plate 122 does not contact directly the jaws 222. The inserts 230 are in contact with the base plate 122 without pressing on the surface of the base plate 122, so that translation movements of the base plate 122 relative to the hanger clamp 200 along any direction radial to the longitudinal axis A120 are prevented, while translation movements the base plate 122 relative to the hanger clamp 200 along the longitudinal axis A120 are allowed.

In other words, the base plate 122 is just leaning on the inserts 230 without additional forces except the busbar 120 own weight. Preferably, an air gap is arranged between the inserts 230 and the surface of the base plate 122. The air gap allows the free sliding of the busbar 120 relative to the clamping portion 220, and also the free orientation of the busbar 120 when the busbar 120 is curved, for example to follow curved tracks and for staggering.

Each insert 230 is received within a respective reception volume V222 and is configured to be positioned between the corresponding jaw 222 and the base plate 122, while allowing sliding movements of the busbar 120 relative to the hanger clamp 200 along the longitudinal axis A120.

The inserts 230 are mare from a material comprising synthetic polymer, that is selected for a low friction coefficient and high wear resistance, so that when the inserts 230 is in contact with a surface of the base plate 122, sliding movements of the busbar 120 relative to the hanger clamp 200 along the longitudinal axis A120 are allowed.

Each insert 230 is also configured to conduct electricity between the base plate 122 and the clamping portion 220. Synthetic polymers used in railroad applications are usually electrically insulating. However, within the scope of the present invention, the material of the inserts 230 comprises a conductive charge, so that the material of the inserts 230 is conductive enough so the clamping portion 220 and the busbar 120 have the same electric potential.

in the field of polymers, a charge is a mass of material, usually in the shape of fine powder or fibers, that is dispersed in a polymer material to reduce the cost and/or to adjust the properties of said polymer material, for example to adjust mechanical properties, density, thermal resistance, etc.

Practically, the material of the inserts 230 has an electrical resistance lower than 10 kΩ - kilo-ohms -, preferably lower than 1.5 kQ. in other words, the inserts 230 are configured to conduct electricity between the base plate 122 and the clamping portion 220.

The conductive charge is preferably in the shape of fiber, to contribute also to the strength of the material of the inserts 230. More preferably, the conductive charge comprises carbon fibers, which are electrically conductive and contribute to improve the tensile strength of the polymer material.

The polymer material of the inserts 230 is preferably a thermoplastic polymer. Compared to other types of polymers, such as thermosetting polymers, thermoplastic polymers show a better mechanical behavior in terms of wear resistance, toughness or thermal resistance. A good example of thermoplastic polymer for the material of the inserts 230 is polyamide.

Raw materials comprising polyamide with carbon fibers added as a charge are, for example, commercially available from LATI Company under the brand name "LatiOhm".

The respective features of the different embodiments and variants of the hanger clamp considered in this description can be combined without departing from the scope of the invention which is defined by the appended claims.

## Claims

1. A hanger clamp (200) for holding a conductive profile (120) of a rigid overhead catenary system (100) belonging to a railtrack (2), the hanger clamp (200) comprising:
- a clamping portion (220), preferentially made of an aluminum alloy, configured to receive a base plate (122) of the conductive profile (120), the clamping portion (220) extending along a median plane (P122) and along a longitudinal axis (A120), which is parallel to the median plane,
- a connecting portion (210), configured to connect said base plate (122) to a fixed element of the railtrack (2), such as a beam or a tunnel ceiling (22),
wherein the clamping portion (220) comprises two jaws (222), each jaw (222) having a U profile extending along the longitudinal axis (A120) and facing each other, each jaw defining a reception volume (V222) configured to receive a respective edge (122A, 122B) of the base plate (122),
wherein the hanger clamp (200) further comprises two inserts (230), each insert being received within a respective reception volume (V222) and being configured to be positioned between the corresponding jaw and the base plate while allowing sliding movements of the conductive profile (120) relative to the hanger clamp (200) along the longitudinal axis, each insert being also configured to conduct electricity between the base plate (122) and the clamping portion (220),
**characterized in that** the inserts (230) are made from a material comprising a synthetic polymer and a conductive charge.

2. The hanger clamp (200) according to claim 1, wherein the jaws (222) are arranged symmetrically from each other apart a longitudinal plane (P120), the longitudinal plane being parallel to the longitudinal axis (A120) and orthogonal to the median plane (P122).

3. The hanger clamp (200) according to claim 1 or 2, wherein the synthetic polymer is a thermoplastic polymer.

4. The hanger clamp (200) according to any one of claims 1 to 3, wherein the conductive charge comprises fibers.

5. The hanger clamp (200) according to any one of claims 1 to 4, wherein the inserts are made from polyamide with carbon fibers.

6. A rigid overhead catenary system (100), comprising a contact line (110) held by a conductive profile (120), the conductive profile (120) being held by hanger clamps (200), wherein at least one of the hanger clamps (200) is according to any one of the preceding claims.

7. A railtrack (2), comprising a track (20) and a rigid overhead catenary system (100) according to the preceding claim.

## Patentansprüche

1. Aufhängeklemme (200) zum Halten eines leitenden Profils (120) eines starren Oberleitungssystems (100), das zu einem Schienensystem (2) gehört, die Aufhängeklemme (200) umfassend:
- einen Klemmabschnitt (220), vorzugsweise gefertigt aus einer Aluminiumlegierung, der konfiguriert ist, um eine Grundplatte (122) des leitenden Profils (120) aufzunehmen, wobei sich der Klemmabschnitt (220) entlang einer mittleren Ebene (P122) und entlang einer Längsachse (A120) erstreckt, die parallel zu der mittleren Ebene ist,
- einen Verbindungsabschnitt (210), der konfiguriert ist, um die Grundplatte (122) mit einem festen Element des Schienensystems (2), wie beispielsweise einem Träger oder einer Tunneldecke (22), zu verbinden,
wobei der Klemmabschnitt (220) zwei Klemmbacken (222) umfasst, wobei jede Klemmbacke (222) ein U-Profil aufweist, das sich entlang der Längsachse (A120) erstreckt und einander zugewandt ist, wobei jede Klemmbacke ein Aufnahmevolumen (V222) definiert, das konfiguriert ist, um einen jeweiligen Rand (122A, 122B) der Grundplatte (122) aufzunehmen, wobei die Aufhängeklemme (200) ferner zwei Einsätze (230) umfasst, wobei jeder Einsatz in einem jeweiligen Aufnahmevolumen (V222) aufgenommen ist und konfiguriert ist, um zwischen der jeweiligen Klemmbacke und der Grundplatte positioniert zu sein, während er Gleitbewegungen des leitenden Profils (120) in Bezug auf die Aufhängeklemme (200) entlang der Längsachse ermöglicht, wobei jeder Einsatz auch konfiguriert ist, um Strom zwischen der Grundplatte (122) und dem Klemmabschnitt (220) zu leiten,
**dadurch gekennzeichnet, dass** die Einsätze (230) aus einem Material gefertigt sind, umfassend ein synthetisches Polymer und eine leitende Ladung.

2. Aufhängeklemme (200) nach Anspruch 1, wobei die Klemmbacken (222) symmetrisch voneinander beabstandet in einer Längsebene (P120) angeordnet sind, wobei die Längsebene parallel zu der Längsachse (A120) und orthogonal zu der mittleren Ebene (P122) ist.

3. Aufhängeklemme (200) nach Anspruch 1 oder 2, wobei das synthetische Polymer ein thermoplastisches Polymer ist.

4. Aufhängeklemme (200) nach einem der Ansprüche 1 bis 3, wobei die leitende Ladung Fasern umfasst.

5. Aufhängeklemme (200) nach einem der Ansprüche 1 bis 4, wobei die Einsätze aus Polyamid mit Kohlefasern gefertigt sind.

6. Starres Oberleitungssystem (100), umfassend eine Fahrleitung (110), die von einem leitenden Profil (120) gehalten wird, wobei das leitende Profil (120) von Aufhängeklemmen (200) gehalten wird, wobei mindestens eine der Aufhängeklemmen (200) nach einem der vorherigen Ansprüche ist.

7. Schienensystem (2), umfassend ein Gleis (20) und ein starres Oberleitungssystem (100) nach dem vorherigen Anspruch.

## Revendications

1. Pince de suspension (200) pour maintenir un profilé conducteur (120) d'un système de caténaire aérienne rigide (100) appartenant à une voie ferrée (2), la pince de suspension (200) comprenant :
- une partie de serrage (220), de préférence en alliage d'aluminium, configurée pour recevoir une plaque de base (122) du profilé conducteur (120), la partie de serrage (220) s'étendant le long d'un plan médian (P122) et le long d'un axe longitudinal (A120), qui est parallèle au plan médian,
- une partie de connexion (210), configurée pour connecter ladite plaque de base (122) à un élément fixe de la voie ferrée (2), tel qu'une poutre ou un plafond de tunnel (22),
dans laquelle la partie de serrage (220) comprend deux mâchoires (222), chaque mâchoire (222) ayant un profil en U s'étendant le long de l'axe longitudinal (A120) et faisant face à l'autre, chaque mâchoire définissant un volume de réception (V222) configuré pour recevoir un bord (122A, 122B) respectif de la plaque de base (122),
dans laquelle la pince de suspension (200) comprend en outre deux inserts (230), chaque insert étant reçu dans un volume de réception (V222) respectif et étant configuré pour être positionné entre la mâchoire correspondante et la plaque de base tout en permettant des mouvements de coulissement du profilé conducteur (120) par rapport à la pince de suspension (200) le long de l'axe longitudinal, chaque insert étant également configuré pour conduire l'électricité entre la plaque de base (122) et la partie de serrage (220),
**caractérisée en ce que** les inserts (230) sont fabriqués à partir d'un matériau comprenant un polymère synthétique et une charge conductrice.

2. Pince de suspension (200) selon la revendication 1, dans laquelle les mâchoires (222) sont agencées symétriquement les unes par rapport aux autres selon un plan longitudinal (P120), le plan longitudinal étant parallèle à l'axe longitudinal (A120) et orthogonal au plan médian (P122).

3. Pince de suspension (200) selon la revendication 1 ou 2, dans laquelle le polymère synthétique est un polymère thermoplastique.

4. Pince de suspension (200) selon l'une quelconque des revendications 1 à 3, dans laquelle la charge conductrice comprend des fibres.

5. Pince de suspension (200) selon l'une quelconque des revendications 1 à 4, dans laquelle les inserts sont fabriqués en polyamide avec des fibres de carbone.

6. Système de caténaire aérienne rigide (100), comprenant une ligne de contact (110) maintenue par un profilé conducteur (120), le profilé conducteur (120) étant maintenu par des pinces de suspension (200), dans lequel au moins une des pinces de suspension (200) est conforme à l'une quelconque des revendications précédentes.

7. Voie ferrée (2), comprenant une voie (20) et un système de caténaire aérienne rigide (100) conforme à la revendication précédente.
